(19) Europäisches Patentamt / European Patent Office / Office européen des brevets

(11) **EP 4 516 743 A1**

(12) **EUROPEAN PATENT APPLICATION**
published in accordance with Art. 153(4) EPC

(43) Date of publication:
**05.03.2025 Bulletin 2025/10**

(21) Application number: **24779395.3**

(22) Date of filing: **12.03.2024**

(51) International Patent Classification (IPC):
**C01G 45/00** (2025.01)    **H01M 4/86** (2006.01)
**H01M 8/12** (2016.01)

(52) Cooperative Patent Classification (CPC):
**C01G 45/00; C01G 45/02; H01M 4/86; H01M 8/12;**
**Y02E 60/50**

(86) International application number:
**PCT/JP2024/009476**

(87) International publication number:
**WO 2024/203265 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.03.2023 JP 2023054610**

(71) Applicant: **DOWA Electronics Materials Co., Ltd.**
**Tokyo 101-0021 (JP)**

(72) Inventors:
• **IIDA, Yusuke**
  **Okayama-shi, Okayama 702-8506 (JP)**
• **IKARI, Kazumasa**
  **Tokyo 101-0021 (JP)**
• **OGAWA, Shintaro**
  **Okayama-shi, Okayama 702-8506 (JP)**

(74) Representative: **Müller-Boré & Partner**
**Patentanwälte PartG mbB**
**Friedenheimer Brücke 21**
**80639 München (DE)**

(54) **PEROVSKITE-TYPE COMPOSITE OXIDE POWDER**

(57)    A perovskite-type composite oxide powder according to the present invention includes: La; and at least one type of element selected from the group consisting of Sr, Ca, Co, Ni. Mn and Fe, a BET specific surface area is less than 6.0 m$^2$/g and a formula (1) below is satisfied:

$$1 \leq \{(D_{90B} - D_{10B}) / D_{50B}\} / \{(D_{90A} - D_{10A}) / D_{50A}\} \leq 2.1 \qquad (1)$$

in the formula, $D_{10}$ is a cumulative 10% particle size by volume, $D_{50}$ is a cumulative 50% particle size by volume and $D_{90}$ is a cumulative 90% particle size by volume when a measurement was performed with a particle size distribution measuring device that uses a laser diffraction/scattering method, and a subscript "A" indicates a particle size after ultrasonic dispersion and a subscript "B" indicates a particle size before ultrasonic dispersion.

EP 4 516 743 A1

**Description**

Technical Field

The present invention relates to a composite oxide powder having a perovskite-type structure, and more particularly relates to a composite oxide powder which is suitably used as an air electrode material for a solid oxide fuel cell (SOFC: hereinafter also simply referred to as an "SOFC").

Background Art

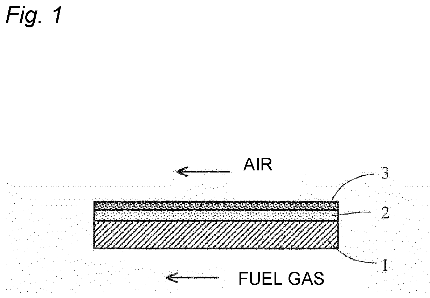

For example, since an SOFC has high power generation efficiency among various types of fuel cells, and a variety of fuels can be used, the SOFC is being developed as a next-generation power generation device with low environmental impact. A single SOFC has a structure in which an air electrode (cathode) of a porous structure, a dense solid electrolyte including an oxide ion conductor and a fuel electrode (anode) of a porous structure are stacked in this order (see FIG. 1). When the SOFC is operated, an $O_2$ (oxygen)-containing gas such as air is supplied to the air electrode, and a fuel gas such as $H_2$ (hydrogen) is supplied to the fuel electrode. When in this state, a current is applied to the SOFC, $O_2$ is reduced into $O^{2-}$ anions (oxygen ions) in the air electrode. Then, the $O^{2-}$ anions pass through the solid electrolyte to reach the fuel electrode, and oxidize $H_2$ to emit electrons. In this way, electrical energy is generated (that is, power is generated).

Although the operating temperature of the SOFC as described above is conventionally about 800 to 1000°C, the operating temperature of the SOFC has been attempted to be lowered in recent years. However, the minimum temperature of the SOFC in practical use is still so high as to be 600°C or more.

Since the cell structure as described above is used and the operating temperature is high, the material of the air electrode in the SOFC is basically required to have, for example, properties in which oxygen ion conductivity is high, electronic conductivity is high, thermal expansion is equivalent or approximate to an electrolyte, chemical stability is high, compatibility with other constituent materials is satisfactory, a sintered member is porous and a constant strength is provided.

In Patent Document 1, the present applicant propose, as the material of the air electrode of the solid oxide fuel cell as described above, a perovskite-type composite oxide powder which is represented by a general formula $ABO_{3-\delta}$ (where $\delta$ represents the amount of loss of oxygen and $0 \le \delta < 1$, an element contained in an A site is La and elements contained in a B site are Co and Ni), and in which a crystallite size determined by a Williamson-Hall method is equal to or greater than 20 nm and equal to or less than 100 nm (Patent Document 1).

Patent Document 2 proposes a conductive oxide having a perovskite-type oxide crystal structure with a composition formula represented by $La_a M_b Ni_c O_x$ (M is at least one of Co and Fe, $a + b + c = 1$, $1.25 \le x \le 1.75$) as a material for the electrode layer and the lead layer of the electrode of a gas sensor element.

Patent Document 3 proposes a perovskite composite oxide powder which is represented by a general formula $ABO_3$, and in which A includes one or more elements selected from the group of La and rare earth elements and one or more elements selected from the group of Sr, Ca and Ba and B includes one or more elements selected from the group of Mn, Co, Fe, Ni and Cu, and the perovskite composite oxide powder is an air electrode raw material powder in which the average particle size is 1 μm or less and the width of a particle size distribution is limited within a predetermined range.

Related Art Document

Patent Document

Patent Document 1: International Publication No. 2022/013903
Patent Document 2: Japanese Unexamined Patent Application Publication No. 2018-112490
Patent Document 3: Japanese Unexamined Patent Application Publication No. 2006-32132

Disclosure of the Invention

Problems to be Solved by the Invention

In a material used for the air electrode of the SOFC, its resistance is desired to be minimized, and its conductivity is desired to be maximized, and in recent years, there has been a demand for further improvement in performance.

Hence, an object of the present invention is to obtain higher conductivity in the perovskite-type composite oxide powder of a specific composition.

Means for Solving the Problem

In order to achieve the object described above, a perovskite-type composite oxide powder according to an embodiment of the present invention includes: La; and at least one type of element selected from the group consisting of Sr, Ca, Co, Ni. Mn and Fe, a BET specific surface area is less than 6.0 m2 / g and a formula (1) below is satisfied:

$$1 \leq \ \{(D_{90B} - D_{10B}) / D_{50B}\} / \{(D_{90A} - D_{10A}) / D_{50A}\} \leq \ 2.1 \qquad (1)$$

in the formula, $D_{10A}$ is a cumulative 10% particle size ($D_{10A}$) by volume, $D_{50A}$ is a cumulative 50% particle size ($D_{50A}$) by volume and $D_{90A}$ is a cumulative 90% particle size ($D_{90A}$) by volume when slurry containing a perovskite-type composite oxide powder obtained by adding 0.15 g of the perovskite-type composite oxide powder to 60 mL of 500 ppm sodium hexametaphosphate aqueous solution (dissolved in ion-exchange water) and dispersing a resulting mixture with an ultrasonic homogenizer at an ultrasonic output of 300 μA for 30 seconds is measured with a particle size distribution measuring device that uses a laser diffraction/scattering method, and $D_{10B}$ is a cumulative 10% particle size ($D_{10B}$) by volume, $D_{50B}$ is a cumulative 50% particle size ($D_{50B}$) by volume and $D_{90B}$ is a cumulative 90% particle size ($D_{90B}$) by volume when slurry containing a perovskite-type composite oxide powder obtained by adding 0.15 g of the perovskite-type composite oxide powder to 60 mL of 500 ppm sodium hexametaphosphate aqueous solution (dissolved in ion-exchange water) is measured with a Microtrac particle size distribution measuring device.

Preferably, in the perovskite-type composite oxide powder according to the embodiment, the cumulative 50% particle size ($D_{50B}$) by volume of the slurry in which the dispersion using the ultrasonic homogenizer is not performed is equal to or greater than 0.5 μm and equal to or less than 1.3 μm.

According to the present invention, an air electrode for a solid oxide fuel cell is provided that is formed to include one of the perovskite-type composite oxide powders described above.

According to the present invention, a solid oxide fuel cell is provided which includes: a fuel electrode; a solid electrolyte; and an air electrode, and in which as the air electrode, the air electrode described above is used.

In the present specification, the BET specific surface area refers to a BET specific surface area that is measured by a measurement method described in Examples which will be described later.

Advantages of the Invention

According to the present invention, it is possible to realize a perovskite-type composite oxide powder which has higher conductivity. The perovskite-type composite oxide powder as described above is used, and thus it is possible to realize an air electrode for a fuel cell and a fuel cell which have high conductivity.

Brief Description of Drawings

FIG. 1 is a cross-sectional configuration view showing an example of a solid oxide fuel cell.

Description of Embodiments

A perovskite-type composite oxide powder according to the present invention (hereinafter also simply referred to as the "composite oxide powder") includes La (lanthanum), and further includes at least one type of element selected from the group consisting of Sr (strontium), Ca (calcium), Co (cobalt), Ni (nickel), Mn (manganese) and Fe (iron).

In other words, the composite oxide powder according to the present invention is represented by a general formula $ABO_{3-x}$, an A site contains La, and may contain at least one of Sr and Ca and a B site contains at least one type of element selected from the group consisting of Co, Ni, Mn and Fe. Here, x represents the amount of loss of oxygen which includes 0, and falls in a range of $0 \leq x < 1$.

In the composition represented by the general formula $ABO_{3-x}$, a composition is preferable in which the A site contains La and Sr, and the B site contains Mn. The amount of Sr contained in the A site and the amount of Mn contained in the B site can be arbitrarily adjusted. As a general formula, the composition can be represented by $LaSr_yMn_{1-y}O_{3-x}$. In the formula, y preferably falls in a range of $1 \leq y \leq 0.9$, and y more preferably falls in a range of $0.3 \leq y \leq 0.85$. The range of x is $0 \leq x < 1$.

Furthermore, in other words, the composite oxide powder according to the present invention is represented by the general formula $ABO_{3-x}$, the A site contains $La_{1-(a+b)}Sr_aCa_b$, and the B site contains at least one type of element selected from the group consisting of Co, Ni, Mn and Fe. Here, x represents the amount of loss of oxygen which includes 0, and falls in a range of $0 \leq x < 1$. The range of a is $0 < a < 1$, and the range of b is $0 \leq b < 1$.

The main components of the composite oxide powder according to the present invention preferably have a perovskite-type structure, and may include other unavoidable impurity phases resulting from raw materials and the like. A single phase perovskite-type structure is preferable.

One of the major features of the composite oxide powder according to the present invention is that the BET specific surface area measured by a BET single point method is less than $6.0\ m^2 / g$. When the BET specific surface area of the composite oxide powder is less than $6.0\ m^2 / g$, an increase in viscosity is suppressed when the composite oxide powder is formed into slurry or paint to be used as an air electrode material, the applicability of the slurry or paint is enhanced and this contributes to conductivity. The BET specific surface area of the composite oxide powder is more preferably equal to or less than $4.5\ m^2 / g$.

On the other hand, the BET specific surface area of the composite oxide powder is preferably equal to or greater than $0.1\ m^2 / g$, and is further preferably equal to or greater than $2.0\ m^2 / g$. When the BET specific surface area of the composite oxide powder is equal to or greater than $0.1\ m^2 / g$, in a case where the composite oxide powder is used to form the air electrode of a fuel cell, an appropriate number of pores can be formed in the surface of the air electrode, and a contact area with gas is increased, with the result that it possible to enhance exchange efficiency of the formation of the fuel cell can be enhanced.

Another one of the major features of the composite oxide powder according to the present invention is that the formula (1) described above is satisfied. For example, in order to enhance the conductivity of the air electrode of a fuel cell, the present inventors et al. have conducted various studies to obtain new findings in which when the content of agglomerated powder in the composite oxide powder serving as the material of the air electrode is decreased, the conductivity of the air electrode is enhanced. Then, the present inventors et al. have decided to use the formula (1) described above as an index of the content of the agglomerated powder of the composite oxide powder.

"$D_{10}$" is a cumulative 10% particle size by volume, "$D_{50}$" is a cumulative 50% particle size by volume and "$D_{90}$" is a cumulative 90% particle size by volume when a measurement is performed with a particle size distribution measuring device that uses a laser diffraction/scattering method. In the present specification, as the particle size distribution measuring device, MT3300EXII made by MicrotracBEL Corp. is used to perform the measurement. It is meant that as "$(D_{90} - D_{10}) / D_{50}$" is decreased, the volume particle size distribution of the composite oxide powder is sharper whereas as "$(D_{90} - D_{10}) / D_{50}$" is increased, the volume particle size distribution of the composite oxide powder is broader.

In the present invention, 0.15 g of the composite oxide powder is added to 60 mL of 500 ppm sodium hexametaphosphate aqueous solution (dissolved in ion-exchange water), the volume particle size distribution of the composite oxide powder before and after ultrasonic dispersion is performed is individually measured, "$(D_{90} - D_{10}) / D_{50}$" (hereinafter, a subscript "B" is added before the ultrasonic dispersion, and a subscript "A" is added after the ultrasonic dispersion to distinguish between both of them) before and after the ultrasonic dispersion is performed is individually calculated and the ratio of the calculated values is used as an index of the content of agglomerated powder in the composite oxide powder. In other words, since most of the agglomerated powder is formed into primary particles after the agglomeration is removed by the ultrasonic dispersion, as the content of the agglomerated powder in the composite oxide powder is increased, "$(D_{90A} - D_{10A}) / D_{50A}$" after the ultrasonic dispersion is performed is smaller than "$(D_{90B} - D_{10B}) / D_{50B}$" before the ultrasonic dispersion is performed. Consequently, as the content of the agglomerated powder in the composite oxide powder is increased, $\{(D_{90B} - D_{10B}) / D_{50B}\} / \{(D_{90A} - D_{10A}) / D_{50A}\}$ is increased.

In the present invention, $\{(D_{90B} - D_{10B}) / D_{50B}\} / \{(D_{90A} - D_{10A}) / D_{50A}\}$ is defined to satisfy a formula (1) below:

$$1 \leq \ \{(D_{90B} - D_{10B}) / D_{50B}\} \ / \ \{(D_{90A} - D_{10A}) / D_{50A}\} \ \leq \ 2.1 \qquad (1)$$

When $\{(D_{90B} - D_{10B}) / D_{50B}\} / \{(D_{90A} - D_{10A}) / D_{50A}\}$ is greater than 2.1, that is, when the content of the agglomerated powder in the composite oxide powder is increased, it cannot be expected that the conductivity of the air electrode of the fuel cell produced using the composite oxide powder is enhanced. The upper limit value of $\{(D_{90B} - D_{10B}) / D_{50B}\} / \{(D_{90A} - D_{10A}) / D_{50A}\}$ is preferably 1.9. When the composite oxide powder does not contain the agglomerated powder, the ratio described above is "1".

The cumulative 50% particle size $D_{50B}$ by volume in the composite oxide powder according to the present invention before the ultrasonic dispersion which is calculated using particle size distribution with a Microtrac particle size distribution measuring device is preferably equal to or greater than $0.5\ \mu m$ and equal to or less than $3.0\ \mu m$. The cumulative 50% particle size $D_{50A}$ by volume after the ultrasonic dispersion which is calculated using the particle size distribution with the Microtrac particle size distribution measuring device is preferably equal to or greater than $0.5\ \mu m$ and equal to or less than $3.0\ \mu m$.

(Manufacturing method)

Although a method for manufacturing the composite oxide powder according to the present invention is not particularly limited, an example of the manufacturing method will be described below. Although as the method for manufacturing the composite oxide powder, there are a wet method in which a precursor and the like are formed in a liquid and are then heat-treated to from a composite oxide and a dry method in which raw materials are weighed, are mixed without being processed and are burned to form a composite oxide, it is preferable to manufacture the composite oxide powder by the wet method in order to achieve the object of the present invention. Although the method for manufacturing the composite oxide powder will be illustrated below, the manufacturing method can be adjusted as necessary without departing from the spirit of the method illustrated here.

(Production of precursor)

As the method for manufacturing the composite oxide powder according to the present embodiment, the following method can be adopted. A raw material solution obtained by dissolving, in water or an acid, raw materials including elements such as La is previously added to an alkaline solution such as ammonia water, a neutralization reaction is performed, and thus slurry containing a neutralization product of a composite oxide is generated. As the raw materials, raw materials are preferable which are released as a gas without being left as impurities in the stage of burning.

The generated neutralization product preferably contains carbonic acid. In this way, when the neutralization product (in the present specification, also referred to as a "precursor") is separated and collected, a phenomenon is suppressed in which the neutralization product reacts with carbon dioxide in the air to locally form into a carbonate so as to enter a crystalline state. Consequently, the precipitation of an impurity phase caused when a perovskite type is formed in the subsequent steps is suppressed, and thus the neutralization product preferably contains carbonic acid. As the addition of carbonic acid into this system, the addition of a carbonate is preferable. Since the resulting neutralization product is amorphous nanoparticles in which the individual elements are uniformly mixed, the elements are easily diffused at the time of burning, with the result that an effect of facilitating change into a single phase and the growth of crystallite is obtained.

A temperature at which the neutralization product is formed is preferably equal to or less than 60°C, more preferably equal to or less than 50°C and further preferably equal to or less than 40°C. The temperature setting as described above is made, and thus materials such as carbonic acid and ammonia which are included in the solution and are easily formed into gases are dispersed as gases from the solution, with the result that the neutralization product can be suitably obtained. Since the neutralization product of the composite oxide obtained in the present embodiment is amorphous nanoparticles in which the individual elements are uniformly mixed, the elements are easily diffused at the time of burning, with the result that an effect of facilitating change into a single phase and the growth of crystallite is obtained.

(Filtration ▪ drying)

The neutralization product obtained is separated from the slurry as necessary, and is washed and thereafter dried, and thus a precursor formed by drying the neutralization product is obtained. As a method of separating the neutralization product from the slurry, for example, any one of filtration separation, separation and collection using a filter press and a method of performing direct drying by spray drying, freeze drying or the like can be adopted. For each of the filtration separation and the filter press, a known method can be adopted. When the direct drying is performed, pH adjustment may be performed so that the precursor obtained is adjusted to have a desired size or the like. Preferably, in the pH adjustment, instead of using an adjustment agent containing an alkali metal such as sodium hydroxide or potassium hydroxide to prevent impurities such as an alkali metal and an alkaline earth metal from being left in a dry-agglomerated material, ammonia or the like which is unlikely to be left by being volatilized at the time of drying is used to make the adjustment. A drying temperature for drying the neutralization product is preferably equal to or greater than 150°C and equal to or less than 350°C, and more preferably equal to or greater than 200°C and equal to or less than 300°C. It is not preferable to dry the neutralization product at a temperature which extremely falls outside the dry temperature range described above because it is likely that a part of the neutralization product is changed into a perovskite type or the neutralization product is not sufficiently dried and thus moisture is left in the precursor.

(Pulverization of precursor)

Fine-pulverizing treatment can be performed by pulverizing the dried precursor. The pulverization may be performed after a burning step which will be described later. When in the drying step described above, drying is performed with a spray drier, it is likely that the pulverization does not need to be performed. Examples of a device used in the pulverization include a mortar, a sample mill, a Henschel mixer, a hammer mill, a jet mill, a pulverizer and an impeller mill, an impact mill and the like when dry pulverization is adopted. For example, the rotation speed when the impact mill is used is preferably equal to or greater than 9000 rpm and equal to or less than 16000 rpm. The rotation speed of the impact mill and a pulverizing time are associated with a burning temperature and a burning time in the burning step, and it is preferable that as the burning temperature is higher and the burning time is longer, the rotation speed of the impact mill and the burning time are increased.

(Burning)

The powder of the precursor which is produced is burned in a burning furnace, and thus the composite oxide is obtained. As the burning furnace, a conventionally known burning furnace which has a heat source such as an electric or gas shuttle kiln, a roller hearth kiln or a rotary kiln can be used. In order to increase the crystallite size of the particles of the perovskite-type composite oxide powder, the burning is preferably performed at the burning temperature which is greater than 1000°C. The burning temperature is preferably equal to or less than 1500°C because it is easy to disintegrate the burned material after the burning.

A temperature increase rate at the time of burning is set equal to or less than 10°C/min, and an atmosphere at the time of burning may be the atmosphere or the burning may be performed in nitrogen containing 1 ppm or more and 20% or less of oxygen. The burning is gently performed, and thus the crystallite size can be adjusted. The burning furnace or a burning container is set to have an open system, and the temperature is increased while a gas component generated from the raw material salt of the component raw materials is being removed. The open system in the present invention refers to a reaction system in which the burning furnace or the burning container is not sealed and the gas of the atmosphere can flow in and out of the burning furnace or the burning container.

(Pulverization)

Then, the granulated material (burned material) after the burning is pulverized. For the pulverization, either wet-pulverization or dry-pulverization may be performed, and both of them may be performed. For dry-pulverization, any one of the devices and the like described as examples for the pulverization of the precursor can be adopted. When wet-pulverization is adopted, a wet ball mill, a sand grinder, an attritor, a pearl mill, an ultrasonic homogenizer, a pressure homogenizer, an Ultimizer and the like can be mentioned. These are used to perform wet- pulverization, and thus it is possible to form the perovskite-type composite oxide under the conditions described above. In particular, the pearl mill is preferably used. When the pearl mill is selected to perform wet-pulverization, though the pulverization can be performed with any one of existing wet-pulverizers such as a vertical flow tube-type bead mill, a horizontal flow tube-type bead mill and a strong pulverizing burst-type viscomill, the horizontal flow tube-type bead mill is preferably used. The horizontal flow tube-type bead mill is suitable because as compared with the vertical flow tube-type bead mill, the horizontal flow tube-type bead mill performs uniform pulverization while being stayed within a vessel to be able to perform uniform pulverization at the same flow rate. The horizontal flow tube-type bead mill is economically preferable because the horizontal flow tube-type bead mill has a high treatment flow rate as compared with the strong pulverizing burst-type viscomill. As a pulverizing medium, a ball manufactured of a hard raw material such as glass, ceramics, alumina or zirconia is preferably used. The particle size of the ball for obtaining the perovskite-type composite oxide having a desired particle size is preferably equal to or greater than 0.1 mm and equal to or less than about 5.0 mm, and more preferably equal to or greater than 0.5 mm and equal to or less than 2.0 mm. As a dispersion medium used in wet-pulverization, water or an organic solvent such as ethanol which has a relatively low boiling point and is easily removed can be used. In terms of manufacturing costs, water is preferably used as the dispersion medium.

When the granulated material (burned material) after the burning is wet-pulverized, the pulverized material after the wet-pulverization is dried, and thus the pulverized/dried material is obtained. The drying method is preferably spray drying. A spray dryer is preferably used as a spray drying device. Among spray dryers, a disk-type spray dryer is more preferable in terms of drying efficiency and mass productivity. A drying temperature is equal to or greater than 60°C and equal to or less than 350°C, preferably equal to or greater than 75°C and equal to or less than 325°C and more preferably equal to or greater than 100°C and equal to or less than 300°C. When the pulverized material is dried at a temperature which extremely falls outside the temperature range described above, it is likely that a part of the pulverized material is changed into a perovskite type or the pulverized material is not sufficiently dried and thus moisture is left in the powder.

Crushing treatment is performed on the pulverized material after dry-pulverization or the pulverized/dried material after wet-pulverization. "Crushing" refers to crushing agglomerated powder. As a crushing device, the device used for dry-pulverization can be used, treatment conditions such as the rotation speed are made less severe than those in the case of pulverization, that is, the rotation speed is decreased and thus the dried material can be crushed without being pulverized. As the crushing device, a device such as a sample mill, a Henschel mixer, a hammer mill, a jet mill, a pulverizer and an impeller mill or an impact mill which can mechanically perform crushing is preferably used. The crushing treatment as described above is performed, and thus the content of agglomerated material in the composite oxide powder is further reduced. For example, when the sample mill is used as the crushing device, the rotation speed is preferably set in a range of 1000 rpm to 4000 rpm.

(Sieving)

After the wet-pulverization, the pulverized material is dried and then sieved to remove coarse particles (agglomerated powder), and thus the composite oxide powder is obtained. Preferably, the mesh size of a sieve used for the sieving is appropriately determined with consideration given to the average primary particle size of the composite oxide powder (after ultrasonic dispersion) and the like. When the average primary particle size of the composite oxide powder is about several tens of micrometers, the mesh size of the sieve is preferably equal to or less than 250 $\mu$m (equal to or greater than 60 meshes), and more preferably equal to or less than 150 $\mu$m (equal to or greater than 100 meshes)

In the particle size distribution of the burned material (perovskite-type composite oxide powder) after the sieving, the cumulative 50% particle size $D_{50B}$ by volume before the ultrasonic dispersion which is calculated using the particle size distribution with the Microtrac particle size distribution measuring device is preferably equal to or greater than 0.5 $\mu$m and equal to or less than 3.0 $\mu$m. The cumulative 50% particle size $D_{50A}$ by volume after the ultrasonic dispersion which is calculated using the particle size distribution with the Microtrac particle size distribution measuring device is preferably equal to or greater than 0.5 $\mu$m and equal to or less than 3.0 $\mu$m.

(Solid oxide fuel cell, SOFC)

An SOFC will be described. FIG. 1 is a cross-sectional configuration view schematically showing an example of the SOFC. The SOFC has a structure in which a fuel electrode 1 in a thin plate shape or a sheet shape which serves as a support member, a solid electrolyte 2 which is formed on the surface of the fuel electrode 1 and an air electrode 3 in a thin plate shape or a sheet shape which is formed on the surface of the solid electrolyte 2 are stacked.

When a fuel gas (which is typically hydrogen ($H_2$) but may be hydrocarbon (methane ($CH_4$)) or the like) is supplied to the fuel electrode 1, a gas (air) containing oxygen ($O_2$) is passed to the air electrode 3 and a current is applied to the fuel cell, in the air electrode 3, the oxygen in the air forms into oxide ions. The oxide ions are supplied to the fuel electrode 1 from the air electrode 3 via the solid electrolyte 2. Then, in the fuel electrode 1, the oxide ions react with the fuel gas to generate water ($H_2O$), and thus electrons are emitted to generate electricity.

Although the SOFC depends on the configuration of a fuel cell which is applied and the manufacturing process thereof, the multilayer of the fuel electrode, the solid electrolyte and the like is previously produced, a layer containing the air electrode material described above is formed on the multilayer by a print method, evaporation or the like, and is then sintered and thus the air electrode is formed, with the result that the fuel cell is produced.

Although the film thickness of the air electrode is not particularly limited and is preferably determined as necessary according to the structure and the like of the cell, for example, the film thickness is preferably equal to or greater than 20 $\mu$m and equal to or less than 50 $\mu$m. As the material of the air electrode, only the composite oxide powder of the present embodiment may be used or a mixture obtained by mixing a perovskite-type composite oxide powder having a different composition or one or two or more types of perovskite-type composite oxide powders having different particle sizes and the composite oxide powder of the present embodiment may be used.

For the solid electrolyte, an electrolyte material used in the air electrode material described above can be used, and examples thereof include a rare earth element-doped ceria-based solid oxide electrolyte and a rare earth element-doped zirconia-based solid oxide electrolyte.

The film thickness of the solid electrolyte is set in a balanced manner such that the solid electrolyte is thick enough to maintain the denseness of the solid electrolyte and is thin enough to provide conductivity of oxygen ions or hydrogen ions suitable for a fuel cell. The film thickness is preferably equal to or greater than 0.1 $\mu$m and equal to or less than 50 $\mu$m, and more preferably equal to or greater than 1 $\mu$m and equal to or less than 20 $\mu$m.

The fuel electrode is preferably formed to have a porous structure and to be able to make contact with the supplied fuel gas, and a material which is conventionally used for an SOFC can be used. Examples thereof include metal oxides formed of one or more types selected from metals and/or metal elements such as nickel (Ni), copper (Cu), gold (Au), platinum (Pt), palladium (Pd), ruthenium (Ru) and other platinum group elements, cobalt (Co), lanthanum (La), strontium (Sr) and titanium (Ti). One or two or more types thereof may be mixed to be used.

In terms of durability, a thermal expansion coefficient and the like, the film thickness of the fuel electrode is preferably equal to or greater than 20 $\mu$m and equal to or less than 1 mm, and more preferably equal to or greater than 20 $\mu$m and equal to or less than 250 $\mu$m.

The structure of the SOFC can be formed in a flat shape, a polygonal shape, a cylindrical (tubular) shape, a flat cylindrical (flat tubular) shape obtained by vertically crushing the circumferential side of a cylinder or the like, which is conventionally known, and the shape and the size thereof are not particularly limited. As a flat SOFC, in addition to a fuel electrode support type (ASC: Anode-Supported Cell), for example, an electrolyte support type (ESC: Electrolyte-Supported Cell) in which an electrolyte is thick, an air electrode support type (CSC: Cathode-Supported Cell) in which an air electrode is thick and the like can be used. Moreover, a metal support cell (MSC: Metal-Supported Cell) in which a porous metal sheet is put under a fuel electrode can be used.

Examples

(Example 1)

(1) Production of precursor

A mixed solution of nitrate which was obtained by mixing 290 g of a solution (La concentration: 15.04% by mass, $NO_3^-$: 270 g / L) obtained by dissolving lanthanum oxide in nitric acid, 17.1 g of strontium nitrate ($Sr(NO_3)_2$) powder and 144.3 g of manganese nitrate ($Mn(NO_3)_2$) aqueous solution with a metal manganese concentration of 50.4% by mass was dissolved in 549.1 g of ion-exchange water, with the result that a mixed solution was produced.

2670 g of ion-exchange water and 330 g of ammonium carbonate were put into a reaction chamber, and were adjusted while being stirred such that the water temperature was 25°C. The mixed solution was gradually added into the ammonium carbonate solution, a neutralization reaction was performed at the water temperature of 25°C, the neutralization product of a perovskite-type composite oxide was precipitated and the neutralization product was thereafter aged for 30 minutes, with the result that the reaction was completed.

(2) Filtering · drying

The neutralization product obtained was filtered and then washed with water, and was molded into an elongated cylindrical pellet shape with a diameter of 5 mm. Immediately after the molding, the pellet-shaped molded member was heated and dried at 250°C for 2 hours while being ventilated by air, and thus a black precursor was obtained.

(3) Buring

50 g of the precursor obtained was put into a round crucible (container having a diameter of 90 mm and a height of 75 mm), was set into an electric muffle furnace (KM-160 made by TOYO ENGINEERING WORKS, LTD.), was increased in temperature from room temperature to 800°C at a temperature increase rate of 3.1°C / min, was increased in temperature from 800°C to 1100°C at a temperature increase rate of 2.6°C / min, was held at 1100°C (burning temperature) for 2 hours to be burned and was then naturally cooled to room temperature.

(4) Dry-pulverization

On the burned material obtained, pulverization treatment was repeated twice, with a preparation volume of 20 g / batch, at a rotation speed of 16000 rpm for 30 seconds with a sample mill pulverizer (model name: SK-M10, made by Kyoritsu Riko Co., Ltd.), and thus a perovskite-type composite oxide powder was obtained.

(5) Wet-pulverization

50 g of the composite oxide powder obtained was put into the pot of a four-tube sand grinder (TSG-4U type, capacity: 350 ml) made by IMEX Co., Ltd. together with 200 g of $ZrO_2$ beads having a diameter of 1.0 mm and 93 g of ion-exchange water. Then, while the pot was being cooled with cooling water at 20°C, wet-pulverization was performed with the pot being rotated at a rotation speed of 1500 rpm for 40 minutes. Thereafter, slurry containing the pulverized material of the composite oxide serving as a solid content was dried at 125°C. Thereafter, the slurry containing the pulverized material of the composite oxide serving as a solid content was granulated and dried at a dry temperature of 200°C while being sprayed with a spray drier (FL-12 type made by OHKAWARA KAKOHKI CO., LTD.) at an atomizer rotation speed of 20000 rpm at a slurry supply rate of 160 g / min.

(6) Crushing

The steps up to the step of the wet-pulverization were performed a plurality of times, and thus 200 g of dried powder was obtained. Crushing treatment was performed on the dried powder obtained with a sample mill pulverizer (model: KIIWR-I type made by DALTON CORPORATION, screen with a dot diameter of 1 mm) at a rotation speed of 3600 rpm.

(7) Sieving

The dried powder obtained was sieved using a vibrating sieve (made by Verder Scientific GmbH & Co. KG, model number: AS200) with a mesh size of 500 $\mu$m (30 meshes), and thus a composite oxide powder according to Example 1 was obtained.

The physical properties of the composite oxide powder obtained were measured by the following measurement methods. The results of the measurements are shown in Table 1.

The composite oxide powder obtained was analyzed by an X-ray diffraction measurement to be described later, and thus it was confirmed that a single phase perovskite-type composite oxide powder was formed.

(Comparative Example 1)

The same method as in Example 1 was performed except that the crushing step after the wet-pulverization was not performed, and thus a composite oxide powder according to Comparative Example 1 was obtained.

The physical properties of the composite oxide powder obtained were measured by the following measurement methods. The results of the measurements are shown in Table 1.

As in Example, it was confirmed by the X-ray diffraction measurement that a single phase perovskite-type composite oxide powder was formed.

(Composition analysis)

An inductively coupled plasma (ICP) emission spectrometer (720ES made by Agilent Technologies, Inc.) was used to perform composition analysis on the perovskite-type composite oxide powder.

(BET specific surface area)

For the composite oxide powder obtained, a BET specific surface area was determined with a BET specific surface area measuring device (4 Sorb US made by Yuasa Ionics Co., Ltd.) by a BET single point method.

(Particle size distribution measurement before treatment of ultrasonic dispersion)

0.15 g of the composite oxide powder obtained was added to 60 mL of 500 ppm sodium hexametaphosphate aqueous solution (dissolved in ion-exchange water), slurry containing the composite oxide powder obtained was used to measure a cumulative 10% particle size ($D_{10B}$) by volume, a cumulative 50% particle size ($D_{50B}$) by volume and a cumulative 90% particle size ($D_{90B}$) by volume of the composite oxide powder with a Microtrac particle size distribution measuring device (MT3300EXII made by NIKKISO CO., LTD.) (with a particle refractive index set to 2.40, a solvent refractive index set to 1.333 and a calculation mode set to MT3000II).

(Particle size distribution measurement after treatment of ultrasonic dispersion)

0.15 g of the composite oxide powder obtained was added to 60 mL of 500 ppm sodium hexametaphosphate aqueous solution (dissolved in ion-exchange water), an ultrasonic homogenizer (US-600TCVP made by NIHONSEIKI KAISHA LTD.) was used to disperse the resulting mixture at an ultrasonic output of 300 μA for 30 seconds and slurry containing the composite oxide powder obtained was used to measure a cumulative 10% particle size ($D_{10A}$) by volume, a cumulative 50% particle size ($D_{50A}$) by volume and a cumulative 90% particle size ($D_{90A}$) by volume of the composite oxide powder with the Microtrac particle size distribution measuring device (MT3300EXII made by NIKKISO CO., LTD.) (with a particle refractive index set to 2.40, a solvent refractive index set to 1.333 and a calculation mode set to MT3000II).

(Conductivity measurement)

2 g of the composite oxide powder was put into a unit having a radius of 10 mm, a powder resistance measurement system (MCP-PD51 made by Mitsubishi Chemical Analytech Co., Ltd.) was used to press the powder with a pressure of 8 kN (Newton) and the conductivity was measured with a resistivity meter (MCP-T610 made by Mitsubishi Chemical Analytech Co., Ltd.) by a 4-point probe method. A ratio with respect to the measured absolute value relative to Comparative Example 1 is also shown in Table 1.

(X- ray diffraction measurement)

An XRD measurement was performed on the composite oxide powder obtained with Ultima IV made by Rigaku Corporation. As measurement conditions, a Cu tubular ball was used, a tube voltage was set to 40 kV, a tube current was set to 40 mA, a divergence slit was set to 1/2°, a scattering slit was set to 8 mm, a light receiving slit was set to open, a step width was set to 0.02° and a measuring time was set to 4° / minute. Based on an X-ray diffraction pattern obtained, analysis software (integrated powder X-ray analysis software PDXL2 ICDS (Inorganic Crystal Structure Database) made by Rigaku Corporation) incorporated in the X-ray diffraction (XRD) device described above was used to identify the crystal phase of the composite oxide powder obtained.

[Table 1]

| | Composition (molar ratio) | | | BET specific surface area | Before treatment of ultrasonic dispersion | | | | After treatment of ultrasonic dispersion | | | | A/B | Conductivity (μS/cm) |
|---|---|---|---|---|---|---|---|---|---|---|---|---|---|---|
| | La | Sr | Mn | m²/g | $D_{10B}$ (μm) | $D_{50B}$ (μm) | $D_{90B}$ (μm) | A: $(D_{90B}-D_{10B})/D_{50B}$ | $D_{10A}$ (μm) | $D_{50A}$ (μm) | $D_{90A}$ (μm) | B: $(D_{90A}-D_{10A})/D_{50A}$ | | |
| Example 1 | 0.8 | 0.2 | 1.0 | 4.23 | 0.57 | 1.08 | 3.59 | 2.79 | 0.49 | 0.92 | 2.74 | 2.45 | 1.14 | 2378 |
| Comparative example 1 | 0.8 | 0.2 | 1.0 | 3.98 | 0.62 | 1.36 | 10.50 | 7.25 | 0.51 | 0.96 | 2.28 | 1.84 | 3.95 | 1980 |

From the results of the composition analysis of the composite oxide powder using the ICP emission spectrometer, it was confirmed by the X-ray diffraction measurement that the composite oxide powders of Example 1 and Comparative Example 1 had the composition formula $La_{0.8}Sr_{0.2}Mn_{1.0}O_3$, and were single phase perovskite-type composite oxide powders.

The conductivity of the composite oxide powder of Example 1 which had a BET specific surface area of $4.23\,m^2/g$, in which $\{(D_{90B} - D_{10B}) / D_{50B}\} / \{(D_{90A} - D_{10A}) / D_{50A}\}$ was 1.14 and which contained almost no agglomerated material was $2378\,\mu S\,/\,cm$ whereas the conductivity of the composite oxide powder of Comparative Example 1 in which $\{(D_{90B} - D_{10B}) / D_{50B}\} / \{(D_{90A} - D_{10A}) / D_{50A}\}$ was 3.95 and which contained a large amount of agglomerated material was so low relative to the composite oxide powder of Example 1 as to be $1980\,\mu S\,/\,cm$.

Industrial Applicability

According to the present invention, it is possible to realize a perovskite-type composite oxide powder which has higher conductivity. The perovskite-type composite oxide powder as described above is used, and thus it is possible to realize an air electrode for a fuel cell and a fuel cell which have high conductivity.

Reference Signs List

1    fuel electrode
2    solid electrolyte
3    air electrode

**Claims**

1.   A perovskite-type composite oxide powder comprising:

La; and
at least one type of element selected from the group consisting of Sr, Ca, Co, Ni. Mn and Fe,
wherein a BET specific surface area is less than $6.0\,m^2\,/\,g$, and
a formula (1) below is satisfied:

$$1 \leq \ \{(D_{90B} - D_{10B}) / D_{50B}\} / \ \{(D_{90A} - D_{10A}) / D_{50A}\} \leq 2.1 \qquad (1)$$

in the formula,

$D_{10A}$ is a cumulative 10% particle size ($D_{10A}$) by volume, $D_{50A}$ is a cumulative 50% particle size ($D_{50A}$) by volume and $D_{90A}$ is a cumulative 90% particle size ($D_{90A}$) by volume when slurry containing a perovskite-type composite oxide powder obtained by adding 0.15 g of the perovskite-type composite oxide powder to 60 mL of 500 ppm sodium hexametaphosphate aqueous solution (dissolved in ion-exchange water) and dispersing a resulting mixture with an ultrasonic homogenizer at an ultrasonic output of $300\,\mu A$ for 30 seconds is measured with a particle size distribution measuring device that uses a laser diffraction/scattering method, and
$D_{10B}$ is a cumulative 10% particle size ($D_{10B}$) by volume, $D_{50B}$ is a cumulative 50% particle size ($D_{50B}$) by volume and $D_{90B}$ is a cumulative 90% particle size ($D_{90B}$) by volume when slurry containing a perovskite-type composite oxide powder obtained by adding 0.15 g of the perovskite-type composite oxide powder to 60 mL of 500 ppm sodium hexametaphosphate aqueous solution (dissolved in ion-exchange water) is measured with a Microtrac particle size distribution measuring device.

2.   The perovskite-type composite oxide powder according to claim 1,
wherein the cumulative 50% particle size ($D_{50B}$) by volume is equal to or greater than $0.5\,\mu m$ and equal to or less than $1.3\,\mu m$.

3.   An air electrode for a solid oxide fuel cell that is formed to include the perovskite-type composite oxide powder according to claim 1 or 2.

4. A solid oxide fuel cell comprising:

a fuel electrode;
a solid electrolyte; and
an air electrode,
wherein as the air electrode, the air electrode according to claim 3 is used.

Fig. 1

EP 4 516 743 A1

## INTERNATIONAL SEARCH REPORT

International application No.

**PCT/JP2024/009476**

### A. CLASSIFICATION OF SUBJECT MATTER

*C01G 45/00*(2006.01)i; *H01M 4/86*(2006.01)i; *H01M 8/12*(2016.01)i
FI:   C01G45/00; H01M4/86 T; H01M8/12 101

According to International Patent Classification (IPC) or to both national classification and IPC

### B. FIELDS SEARCHED

Minimum documentation searched (classification system followed by classification symbols)

C01G25/00-47/00;49/10-99/00;C01G45/00; H01M4/86-4/98; H01M8/00-8/0297;8/08-8/2495

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus(JDreamIII);JST7580 (JDreamIII); JSTChina (JDreamIII);CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2020-55705 A (DOWA ELECTRONICS MATERIALS CO., LTD.) 09 April 2020 (2020-04-09)<br>    entire text | 1-4 |
| A | WO 2022/029992 A1 (DOWA ELECTRONICS MATERIALS CO., LTD.) 10 February 2022 (2022-02-10)<br>    entire text | 1-4 |
| A | WO 2022/013903 A1 (DOWA ELECTRONICS MATERIALS CO., LTD.) 20 January 2022 (2022-01-20)<br>    entire text | 1-4 |
| A | JP 2022-184894 A (DOWA ELECTRONICS MATERIALS CO., LTD.) 13 December 2022 (2022-12-13)<br>    entire text | 1-4 |

☑ Further documents are listed in the continuation of Box C.      ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 516 743 A1

<table>
<tr><td colspan="2" style="text-align:center"><b>INTERNATIONAL SEARCH REPORT</b></td><td>International application No.<br><b>PCT/JP2024/009476</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 2020-113424 A (DOWA ELECTRONICS MATERIALS CO., LTD.) 27 July 2020 (2020-07-27)<br>entire text | 1-4 |
| A | JP 2020-55704 A (DOWA ELECTRONICS MATERIALS CO., LTD.) 09 April 2020 (2020-04-09)<br>entire text | 1-4 |
| A | JP 2011-228009 A (DOWA ELECTRONICS MATERIALS CO., LTD.) 10 November 2011 (2011-11-10)<br>entire text | 1-4 |
| A | JP 4-193701 A (KABUSHIKI KAISHA MEIDENSHA) 13 July 1992 (1992-07-13)<br>entire text | 1-4 |
| A | SUEHIRO, S. et al. Synthesis and NOx sensing evaluation of hollow/porous La 0.8Sr 0.2MnO 3 microspheres. RSC Advances. 27 May 2016, 6, pp. 53919-53924<br>entire text | 1-4 |

Form PCT/ISA/210 (second sheet) (July 2022)

**INTERNATIONAL SEARCH REPORT**
**Information on patent family members**

International application No.

**PCT/JP2024/009476**

| Patent document cited in search report | | | Publication date (day/month/year) | Patent family member(s) | | | Publication date (day/month/year) |
|---|---|---|---|---|---|---|---|
| JP | 2020-55705 | A | 09 April 2020 | (Family: none) | | | |
| WO | 2022/029992 | A1 | 10 February 2022 | US entire text EP entire text KR CN | 2023/0197972 004137459 10-2022-0136491 115697912 | A1 A1 A A | |
| WO | 2022/013903 | A1 | 20 January 2022 | US entire text EP entire text KR CN | 2023/0216065 004180398 10-2022-0154809 115768727 | A1 A1 A A | |
| JP | 2022-184894 | A | 13 December 2022 | US entire text EP entire text KR CN | 2023/0197972 004137459 10-2022-0136491 115697912 | A1 A1 A A | |
| JP | 2020-113424 | A | 27 July 2020 | (Family: none) | | | |
| JP | 2020-55704 | A | 09 April 2020 | (Family: none) | | | |
| JP | 2011-228009 | A | 10 November 2011 | (Family: none) | | | |
| JP | 4-193701 | A | 13 July 1992 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022013903 A
- JP 2018112490 A
- JP 2006032132 A